(19)

Europäisches
Patentamt

European
Patent Office

Office européen
des brevets

(11) **EP 2 883 837 B1**

(12) **EUROPEAN PATENT SPECIFICATION**

(45) Date of publication and mention
of the grant of the patent:
**02.11.2016 Bulletin 2016/44**

(51) Int Cl.:
***C01B 33/037*** (2006.01)

(21) Application number: **13196587.3**

(22) Date of filing: **11.12.2013**

(54) **METHOD FOR REFINING SILICON USING AN ELECTRON BEAM**

VERFAHREN ZUR RAFFINATION VON SILICIUM UNTER VERWENDUNG EINES
ELEKTRONENSTRAHLS

PROCÉDÉ DE RAFFINAGE DU SILICIUM À L'AIDE D'UN FAISCEAU D'ÉLECTRONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **Institute of Solid State Physics,
University of Latvia
1063 Riga (LV)**

(72) Inventors:
• **Cikvaidze, Georgijs
LV-1019 Riga (LV)**
• **Kalle, Alexande
64289 Darmstadt (DE)**

(74) Representative: **Fortuna, Aleksandra
Foral Patent Law Offices
P.O.Box 98
Riga 1050 (LV)**

(56) References cited:
**US-A1- 2011 013 559    US-B2- 7 704 478**

• **V. A. OSOKIN ET AL: "Structural features of high
purity silicon prepared by electron-beam refining
of metallurgical-grade silicon", METALLURGIST
(RUSSIAN ORIGINAL NOS. 7-8, JULY-AUGUST,
2011), vol. 55, no. 7-8, 1 November 2011
(2011-11-01), pages 607-614, XP055112941, ISSN:
0026-0894, DOI: 10.1007/s11015-011-9475-6**
• **OSOKIN AND V A PANIBRATSKI V A: "[Refining
of metallurgical-grade silicon by electron-beam
action in a vacuum]", VIMIR. OBCHISL. TEKHN.
TEKHNOL. PROTS. [MEASURING AND
COMPUTING DEVICES IN TECHNOLOGICAL
PROCESSES] UKRAINE , vol. 1 1 January 2010
(2010-01-01), pages 40-47, XP008167608, ISSN:
2219-9365 Retrieved from the Internet:
URL:http://library.tup.km.ua/pdf/vottp/vot
tp-2010-1.pdf [retrieved on 2014-02-25]**

## Description

Technical Field

The present invention generally relates a method of processing low-grade metallurgical silicon for the purpose of obtaining silicon that is suitable for solar (photovoltaic) elements. The method involves the usage of electron beam technology for obtaining highly purified basic material containing clusters where the metal impurities remaining after refining concentrate.

Background Art

Production of solar cells from cheap silicon is an important economic and scientific problem. Cheap metallurgical grade silicon contains a lot of impurities. Small particles of metals, sized to 30 nm, distributed chaotically in the structure of silicon, are known to limit the average distance that electrons may travel, i.e. shorten the life of minority carriers. The greater is that distance, the longer is the life of carriers, hence the material of a solar cell converts energy more efficiently. Ever-growing demand for electric power causes an impetuous growth in the amounts of electric power obtained through the use of solar battery panels. As of today, over 90% of all solar elements are made of silicon. Increased demand for silicon of solar quality, which differs from electronic silicon in terms of both purity and price, requires larger amounts of cheap material.

Metallurgical grade silicon (MG-Si grade) is used in metal industry as a doping material. This material is produced from relatively pure quartz grit and charcoal or coke, at that, the silicon is 99.9% (3N) pure. Silicon of such quality may not be used for producing solar elements. This requires 8N-9N (99.999999 - 99.9999999%) pure silicon.

Silicon of relative higher purity - 4N to 5N, that is, 99.995 - 99.999% is called as "technical silicon" and is often used as a basic material for producing electronic (semiconductor) silicon of the highest achievable purity level - 11-12 N, i.e. 99.9999999999 %. Such silicon is traditionally referred to as polycrystalline silicon and obtained from technical silicon by transforming the latter into volatile silanes (monosilane, chlorosilanes, fluorosilanes) followed by silane separation and rectifying purification and known as traditional trichlorsilane technology.

Another kind of the silicon production is so-called SOG-Si, silicon of solar grade, which has slightly lower quality. Such material is pure enough for the needs of solar industry and is an 8N-9N, i.e. 99,999999 - 99,9999999% pure material. The total yearly world production of such silicon is 30-40 thousand tons.

Solar elements may be made with silicon of lower purity level. The main issues encountered there are the sufficient efficiency of solar elements, which is about 13 to 14%, and the sufficient stability of such efficiency over the period of service. Loss in efficiency is called degradation and is normally about 0.5% a year.

There are known methods of technical silicon purification have been applied in order to achieve the objective of obtaining a material that would be fit for the purposes of photovoltaic elements. There are methods of zone melting (US 8 454 920), of vacuum melting using the Bridgeman method (WO 2012/100485) and others.

There is known method of melting and purifying technical silicon with an electron beam (US7 704 478), where the method for refining silicon can remove impurity elements such as phosphorus and antimony, boron and carbon in a single vacuum chamber using an electron beam. Productivity of that method would be improved and silicon for use in solar elements could be produced at a lower cost.

Summary of the Invention

The proposed method for refining silicon comprises electron-beam melting of silicon using an electron-beam gun with cold cathode, followed by vacuum purification of low-grade silicon from impurities, such as phosphorus, arsenic, antimony, boron and/or carbon, then crystallization of the molten mass of silicon, wherein in the crystallization step the molten mass of silicon is cooled down to temperature in the range from 1400 °C to 900 °C, within 40 to 60 minutes to form quantum dots clusters in the supercooling of concentration centers regime, where cluster sizes of quantum dots are 30 - 50 nm and average sizes of quantum dots obtained no more than 5 nm. At the beginning of the crystallization step molten mass of silicon is being held at the temperature of 1400°C during 2-3 minutes. The electron beam melting silicon is controllably moved from one point to another point on the surface of the melt and making circulation at every point, thereby initiating the formation of the cluster, where circulation at every point is being made from 20 to 30 microseconds. The temperature inside each circulated point is controllably changed, such that the temperature inside (at the center of) each circulated point would be 10-12°C lower than the temperature at circumference of said circulated point. A partial carbonization of the clusters and doping by such impurities, as phosphorus and/or boron atoms are at temperature from 800°C to 900°C.

By practical experimentation is discovered that the distribution of metal impurity particles in silicon may be controlled by varying its cooling speed. At a slower pace of cooling, metal particles formed larger agglomerations, thereby allowing increase the average length of the free path of electrons tenfold as compared to the initial material. The subsequent formation of cluster conglomerates of residual impurities was introduced. The silicon obtained is no less efficient than the highest-grade solar-silicon refined using standard silan-gas methods. This new technology clearly shows that the manufacture of silicon for solar elements may be made essentially cheaper, resulting in the eventual decrease in cost of solar elements.

Metallurgical grade silicon (MG-Si) 3N to 4N pure is used as a base material for producing silicon that would be suitable for use in solar elements. The process of refining metallurgical silicon included: electron-beam refining of the material and its subsequent crystallization in the circumstances of a direct contact between hard and liquid phases in a mode that's close to balance.

Knowing the phasing diagram and thermochemical properties of silicon-based systems allows to yield silicon with the electric parameters that make it suitable for solar elements, that has a specific resistance of at least 1 Om/cm and includes microscopic three-dimensional clusters (quantum dots arrays) consisting of a multi-component element system Si -Ag -Al -As- Au -B- Vi- C -Ca- Co-Cr - Cu-Fe -Ga- Ge -In- Li- Mg-Mn -Mo-N- Na -Ni- O-P- Pb -S- Sb- Sn -Te- Ti -V- W-Zn -Zr.

The multi-dimensional conglomerates containing clusters of quantum dots obtained through electron beam smelting of metallurgical grade silicon with different quantum dots cluster concentrations are used. Quantum dots clusters were formed of different metals and metal oxides contained in low-grade silicon and were of domical or spherical shape, with a base of 50 nm and 10-20 nm high. Structures were obtained through electron beam smelting of silicon. The principal methods used for investigation of silicon samples were FTIR - spectroscopy, electron microscopy, X-ray diffractometry, photo effect measurement.

The proposed method constitutes a basis for a new idea of photoelectric processes that take place in silicon purified using the electron beam melting and containing dense arrays of quantum dots. The method provides evidence of the possibility of producing solar elements from low grade and low-cost silicon through vacuum electron beam purification and forming quantum dots arrays, using crystallization under the directed influence of an electronic beam and applying additional treatment. The material containing three-dimensional quantum dots arrays may provide a basis for improving the construction of a solar cell with increased photo effect derived from absorbing infrared radiation, especially in case with highly intensive sunlight; such solar cells show increased efficiency in the wavelength sector of 1-2 microns and the degradation period of solar cells using the quantum dots cluster effect is considerably longer than that of regular solar cells made of flawless SOG-Si material.

In the process of melting according to the present invention heat is emitted immediately in the material thanks to the energy of the electron beam generated by the e-beam gun; the molten mass is separated from the walls of the crucible with a skull layer - a crust of solidified material that prevents the pollution of the molten mass with the material of the crucible; the amount of heat supplied to the molten mass of silicon is adjustable precisely by controlling the electron beam power; electron beam melting may be carried out in vacuum or relative vacuum, using electron-beam gun with cold cathode, in the controlled reactive gas atmosphere under small pressures; electron beam melting yields multi-crystalline blocks suitable for producing solar elements; electron beam melting plants may operate in periodical or continuous mode.

Brief Description of Drawing

Fig. 1 shows scheme of the process of impurity vacuumization;
Fig. 2 - scheme of the crystallization process;
Fig. 3 - diagram of comparative power output trials of solar panels;
Fig. 4 - diagram of greater power output by an UMG -module;
Fig. 5 - diagram of an UMG-module producing more power by 4 kWh.

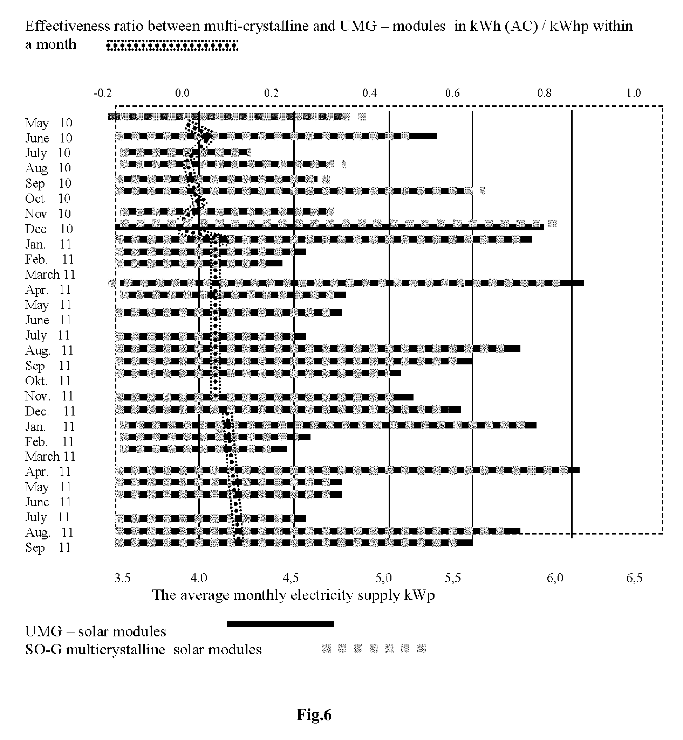

Fig. 6 - effectiveness ratio between multi-crystalline and UMG - modules in kWh (AC) /kWhp within a month.

Detailed Description of the Invention

The material is loaded into the crucible and the melting is initiated by directing the electron beam at the material in the first crucible and then switching to the automatic melting mode acting through the method of scanning the material. As soon as the material in the crucible is completely melted, the attendant temperature reaching about 1415°C, the temperature of the molten mass in the crucible is decreased by stirring it with an electron beam, and then the molten mass is heated gradually to the vaporization point of certain impurities that are designated. This is the primary vacuum purification. After the material is completely melted and the primary vacuum purification is completed, the molten silicon is poured into the vacuumization crucible with the cold cathode electron beam gun. Simultaneously, the material is intensively stimied, thereby promoting better purification of the material. The process of removing impurities through the use of the vacuum method resides in selective heating along with vacuum pumping.

In order to improve the processing of the material, the employed system includes three crucibles and three electron beam guns. The capacity of each electron-beam gun is up to 60 kW. The electron-beam gun used to work with the crucible where impurities are vacuumized is equipped with cold cathode. The remaining two guns , used for melting and crystallization, are equipped with thermo-cathodes.

The essence of the vacuum impurity removal method resides in the variation of the power of the electron beam along with the temperature of the molten mass by varying hydrogen supply in the electron gun. The surface of the molten mass has a temperature that considerably exceeds the fusion temperature. Thereby, the vaporization of impurities and the compounds of such speeds up, and the vapor pressure are higher than that of the silicon being purified. After the melting, the electron ray powerful enough to keep silicon molten is consecutively concentrated on certain areas of the surface of the molten mass for the time that's required to remove impurities and compounds thereof from the molten mass. Different elements of the periodic table, like antimony, arsenic, phosphorus, boron, titanium, aluminum are removed at different temperatures, considering the different vapor pressure of those elements. The process is controlled by a mass-spectrometer.

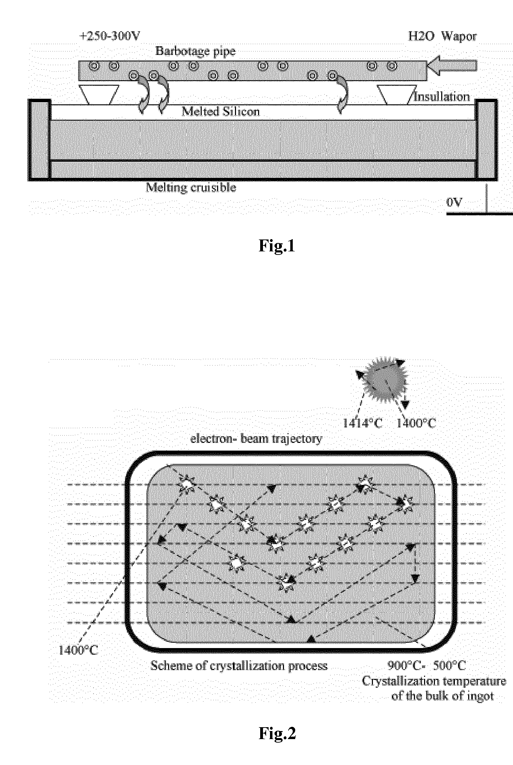

To intensify the process of impurity vacuumization, a plasma arc is lit between the plasma cross-rail and the copper body of the crucible (Fig.1). Additionally, gas is supplied onto the surface of the molten mass - the barbotage method. Barbotage yields a large interphase surface at the border of molten mass and gas, which is conducive to the intensification of thermochemical interaction between gases and molten mass.

After the 2.5-hour period of melting and vacuumization is completed, the molten mass crystallization process is initiated. It lasts 60 minutes and the power transmitted by the beam is decreased gradually to 20 kW over that time. At that, the molten mass is crystallized at the pace that allows the effective origination of microscopic metal conglomerates that essentially are three-dimensional quantum dots arrays (Fig.2). In order for islands (clusters) to originate effectively, the electron beam is driven in accordance with the program.

The origination of volumetric quantum dots clusters is determined by the balance of the surface energy of the molten membranous layer of silicon and the inner energy of the volume of an island (clusters). Free energy of the newly formed embryo is calculated within of the equation:

$$\Delta F = -V \, \Delta\mu + \gamma S + Ei.$$

It is a sum of three components: the work of the formation of a new embryo in the volume of V, where $\mu$, is the thermodynamic driving force of crystallization, the work required in order to create additional surface S, where y is the surface energy of an embryo and additional energy Ei, resulting from the plastic deformation of the embryo. The key factor here is the decrease in tension energies due to plastic deformation. The Ostwald's cluster ripening phenomena describes the conditions or their development. The distance between clusters and the orientation of clusters in the growth volume is called self-organization of the system. This is a result of minimization of free energy.

The condition for the growth of clusters is the possibly lower temperature of their formation and high growth rate. The possibility of the formation of clusters increases along with the growth rate. Field distortion resulting from the plastic deformation of material with the electron ray of the electron gun penetrates from a cluster to the refilling Si layer. The surface of this layer is where the preferential spots for the formation of new clusters (nano-cluster groups) appear. The process of cluster growth may be controlled through the means of adjusting the thickness of the refilling layer by scanning the surface of molten silicon.

Spontaneous formation of nano-cluster groups at the experimentally determined crystallization temperature results in the growth of metal and other conglomerates that essentially are three-dimensional quantum dots arrays.

The resulting metal/Si structures are heterogeneous junctions where electrons and holes are in potential wells and the transport mechanism is essentially the transport of holes through hopping conductivity with variable hopping length. Thermal dependence of conductivity is calculated within of the equation:

$$G(T) = ( e^2/ h) \exp ( - (T_0/T)^{1/2} )$$

The value of hopping conductivity between quantum dots depends on the charge state of the dots and oscillates along with the consequential filling of energy levels in dots with charge carriers. The correlations between such parameters of the process as the degree of vaporization of different impurities and temperature, pressure and partial resilience of vapors of specific impurities are revealed. The aggregate capacity of the electron beam produced by all three guns varied between 120 and 180 kW, scanning frequency varied between 30 and 450 Hz. The size of beam spot varied between 1 cm and 4 cm. The degree of vaporization of specific impurities was measured while all the parameters of the process were maintained constant for five to seven minutes for the purpose of achieving static balance. At that, the intensity of a specific line within the spectrum was controlled. The process was maintained stable until the respective line of the spectrograph reached the achieved level. We used a quadropolic mass spectrometer from Pfeifer.

The efficiency of vaporization of specific impurities was compared in Langmuirs. (1L = 1torr x $\mu$s, approximately 133 Pa x $10^{-6}$ s) The highest scanning frequency led to the most efficient impurity vaporization. The gain at the highest scanning frequency of 450 Hz was 50% greater than that at the frequency of 30 Hz. The calculations were made using Stall's partial pressure tables (http://padaread.com/?book=5831&pg=55).

There are determined the growth conditions for metal/Si type clusters that allow the growth of three-dimensional quantum dots arrays in low-grade MG-Si silicon. This yields two results at once: non-metal impurities are removed by a vacuum pump through using partial pressure differences for different elements. The remaining impurities are conglomerated. The basic material - Si (excluding impurities clusters), is pure solar grade (SO-G) class silicon. The resulting clusters are groups of quantum dots, where clusters dimensions in the growth plane are 40-50 nm, agglomeration temperature of growing clusters is 1400°C, temperature in the melted area of cluster is 1414°C , the time of circular heat-up of the point of concentration is about 25 microseconds

The method involves the usage of electron beam technology for obtaining highly purified basic material containing clusters where the metal impurities remaining after refining concentrate. Purified basic silicon has the impurity level of less than 0.5 parts per million (0.5 ppm). Due to the high content of quantum dots clusters, being small traps, in the material (silicon) obtained through the use of the described method, IR-light releases charge carriers from these traps, which leads to an increase in photoelectric current and thus increases the efficiency of a solar element. In order to achieve the designated objective, there is tested and fixed the electron beam melting mode, which allows to achieve the effect of purifying (MG-Si) silicon and forming clusters that bind the residual impurities.

The present invention provides the method of complex purification of metallurgical silicon through selective volatilization of undesired impurities using the difference between partial pressures of impurities, with online mass-spectrometric control of the degree of volatilization of separate impurities, applying the optimum scheme of scanning an electron beam with a frequency of up to 450 Hz and the diameter of the electron beam varying between 1 cm and 4 cm. After achieving the maximum volatilizing purity, the material is mixed by pouring it into a crystallization crucible for the additional procedure of electron beam consolidation of the remaining impurities with the formation of clusters following a certain pattern, which includes scanning the molten silicon mass with an electron beam of increased power that takes place along with the crystallization process of the basic material. This is accompanied by the formation of three-dimensional clusters of complex composition, which essentially are quantum dots arrays. The three-dimensional quantum dots clusters produced in process within a solar cell as charge carrier sources and increase the sensitivity of photo elements in the infrared segment of the spectrum.

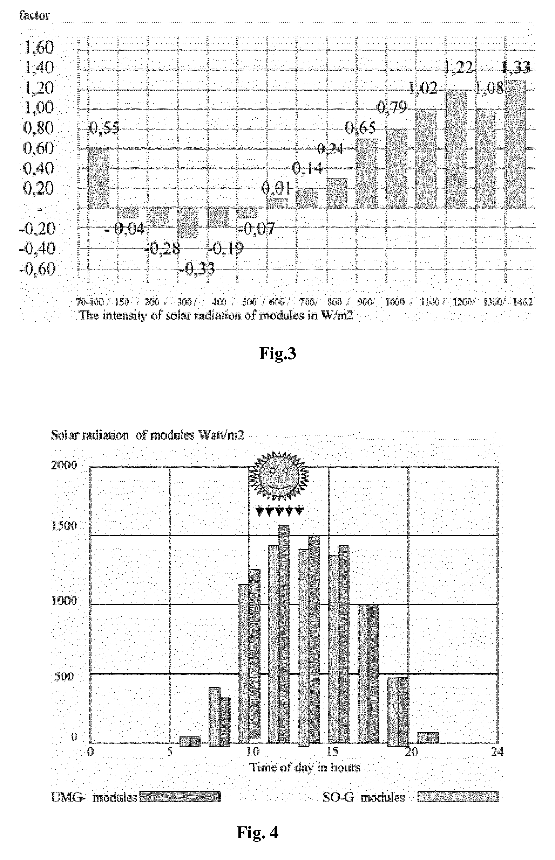

The resulting new material UMG-Si, (electron-beam processed material) is base for manufacturing of solar modules. Experimental verification of using modified silicon in solar panel production (Fig. 3, 4 and 5) made by monitoring of the efficiency of solar panels of modified metallurgical silicon for two and a half years.

Relative power output by solar panels made of UMG-material and solar panels made of high-quality polycrystalline material (Fig.4) has demonstrated that UMG showed better results than normal solar silicon. The efficiency of solar panels made of UMG-material and solar panels made of high-quality polycrystalline material depending on the intensity of solar irradiation of panels in W/m$^2$.

Fig. 3 shows the ratio of the growth of efficiency of solar modules made of UMG-material produced from electron beam processed MG-Si with the formation of quantum dots arrays compared to solar modules made of SOG-Si, a high-quality polycrystalline material depending on the intensity of solar irradiation in W/m$^2$.

The following is obvious: the power output of UMG-modules varies depending on the intensity of irradiation. At low irradiation intensity levels, in morning and evening hours, modules made of solar multi-silicon have the advantage. As the intensity of irradiation grows, beginning with 500 W/m2, the output of UMG-modules increases considerably, up to the factor of 1.33 at maximum solar irradiation. UMG-modules prove to be more effective than modules made of high-quality polycrystalline material.

Greater power output of a UMG-module at the peak of solar irradiation compared to a standard solar module made of conventional solar SO-G - Silicon material is attributable to the expanded sensitivity of a UMG-module to the IR-band of the solar spectrum. Increased energy output at the peaks of thermal heating is due to the electronic phenomena occurring in dense clusters of quantum dots.

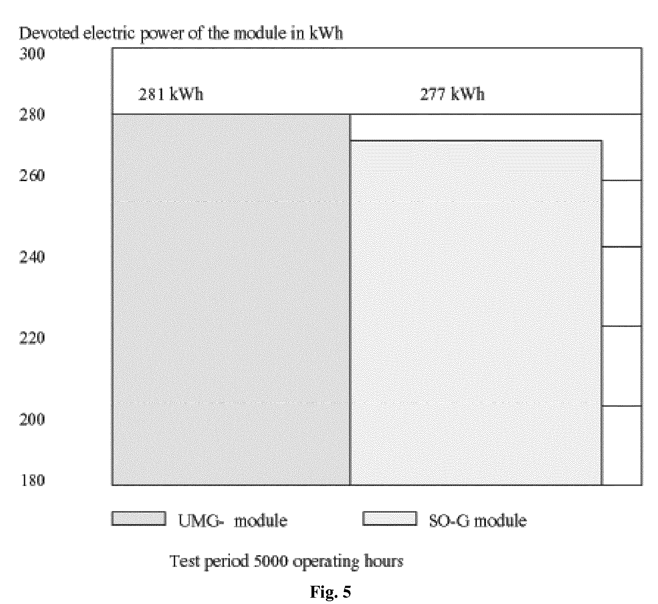

A UMG-module has produced 4 kWh more power than a commercial-grade module made of commercial-grade solar SO-G - silicon material (Fig.5).

The degradation of the modules produced using the metallurgical silicon purified with the proposed method using electron beam technology matches the degradation level of standard polycrystalline modules and equals 0.5% annually.

A refining method according to the present invention can be applied to the process of electron beam melting of silicon followed by vacuum cleaning and focused clustering of residual impurities, which are conglomerates of quantum dots and which favors the increase in the photosensitivity of the material in the infrared spectrum. In summary a method for refining silicon has been provided, which comprises electron-beam melting of silicon using an electron beam gun, preferably an electron beam gun with a thermo-cathode, followed by vacuum purification of metallurgical-grade silicon from impurities, such as phosphoms, arsenic, antimony, boron and/or carbon, using an electron beam gun with a cold cathode, then crystallization of the molten mass of silicon, wherein in the crystallization step the molten mass of silicon is cooled down to temperature in the range from 1400 °C to 900 °C, within 40 to 60 minutes to form quantum dots clusters, which are formed of metals and metal oxides contained in the metallurgical grade silicon, where sizes of the quantum dots clusters are 30 - 50 nm and average sizes of quantum dots obtained are no more than 5 nm. This method of purification allows for the production of silicon usable for the manufacture of highly effective solar elements non-inferior to solar elements of the highest grade in terms of efficiency.

## Claims

1. A method for refining silicon, which comprises electron-beam melting of silicon using an electron beam gun, preferably an electron beam gun with a thermo-cathode, followed by vacuum purification of metallurgical-grade silicon from impurities, such as phosphorus, arsenic, antimony, boron and/or carbon, using an electron beam gun with a cold cathode, then crystallization of the molten mass of silicon, wherein in the crystallization step the molten mass of silicon is cooled down to temperature in the range from 1400 °C to 900 °C, within 40 to 60 minutes to form quantum dots clusters, which are formed of metals and metal oxides contained in the metallurgical grade silicon, where sizes of the quantum dots clusters are 30 - 50 nm and average sizes of quantum dots obtained are no more than 5 nm.

2. The method according to claim 1, wherein at the beginning of the crystallization step molten mass of silicon is being held at the temperature of 1400°C during 2-3 minutes.

3. The method according to claim 1 or 2, wherein the electron beam melting silicon is controllably moved from one point to another point on the surface of the melt and making circulation at every point, thereby initiating the formation of the cluster, where circulation at every point is being made from 20 to 30 microseconds.

4. The method according to claim 3, wherein the temperature inside each circulated point is controllably changed such that the temperature inside each circulated point would be 10-12°C lower than the temperature at circumference of said circulated point.

5. The method according to any preceding claims, wherein a partial carbonization of the clusters and doping by such impurities, as phosphorus and/or boron atoms are at temperature from 800°C to 900°C.

6. The method according to any preceding claims, wherein the total power of electron beams is between 120 and 180 kW, electron beam exposure frequency is between 30 and 450 Hz and the size of beam spot is between 1 cm and 4 cm.

## Patentansprüche

1. Verfahren zur Raffination von Silizium, bestehend aus einem Elektronenstrahlschmelzverfahren des Siliziums unter Verwendung einer Elektronenstrahlkanone, vorzugsweise einer Elektronenstrahlkanone mit einer Thermo-Kathode, gefolgt von einer Vakuumreinigung von metallurgisch aufbereitetem Silicium ohne Verunreinigungen, wie Phosphor, Arsen, Antimon, Bor und/oder Kohlenstoff, mithilfe einer Elektronenstrahlkanone mit Kaltkathode, einem Kristallisationsschritt der geschmolzenen Siliziummasse, wobei im Kristallisationschritt die geschmolzene Siliziummasse innerhalb von 40 bis 60 Minuten auf eine Temperatur zwischen 1400 ° C und 900 °C abgekühlt wird, um Quantenpunkt-Cluster zu bilden, die aus metallurgisch aufbereitetem Silizium bestehen und deren Quantenpunkt-Cluster 30 - 50 nm groß sind, wobei die Durchschnittsgröße der Quantenpunkte nicht mehr als 5 nm beträgt.

2. Verfahren nach Anspruch 1, wobei zu Beginn des Kristallisationsschrittes die geschmolzene Siliziummasse für 2 - 3 Minuten bei einer Temperatur von 1400 ° C gehalten wird.

3. Verfahren nach Anspruch 1 oder 2, wobei das mit Elektronstrahl geschmolzene Silizium kontrollierbar auf der Oberfläche der Schmelze von einem Punkt zu einem anderen Punkt bewegt wird und an jedem Punkt zirkuliert, wodurch die Bildung der Cluster an jedem Punkt, an dem die Zirkulation 20 bis 30 Mikrosekunden dauert, initiiert wird.

4. Verfahren nach Anspruch 3, wobei die Temperatur im Inneren eines jeden zirkulierten Punktes kontrollierbar geändert wird, so dass die Temperatur im Inneren eines jeden zirkulierten Punktes 10 - 12 °C niedriger ist als die Temperatur am Umfang des besagten zirkulierten Punktes.

5. Verfahren nach einem der vorhergehenden Ansprüche, wobei eine teilweise Karbonisierung der Cluster und Dotierung mit Verunreinigungen, wie Phosphor und/oder Bor-Atomen bei einer Temperatur von 800 °C bis 900 °C stattfindet.

6. Verfahren nach einem der vorhergehenden Ansprüche, wobei die Gesamtleistung der Elektronenstrahlen zwischen 120 und 180 kW beträgt und die Belichtungsfrequenz des Elektronenstrahls zwischen 30 und 450 Hz liegt, und der Strahlfleck eine Größe zwischen 1 cm und 4 cm erreicht.

## Revendications

1. Procédé de raffinage de silicium, qui comprend la fusion par faisceau d'électrons de silicium à l'aide d'un canon à faisceau d'électrons, de préférence un canon à faisceau d'électrons avec une thermo-cathode, suivie par la purification sous vide de silicium de qualité métallurgique des impuretés, telles que le phosphore, l'arsenic, l'antimoine, le bore et/ou le carbone, à l'aide d'un canon à faisceau d'électrons avec une cathode froide, puis la cristallisation de la masse fondue de silicium, dans lequel, dans l'étape de cristallisation, la masse fondue de silicium est refroidie à une température dans la plage allant de 1400 °C à 900 °C, dans les 40 à 60 minutes, pour former des groupes de points quantiques, qui sont formés de métaux et d'oxydes de métaux contenus dans le silicium de qualité métallurgique, où les tailles des groupes de points quantiques vont de 30 à 50 nm et les tailles moyennes des points quantiques obtenus n'excèdent pas 5 nm.

2. Procédé selon la revendication 1, dans lequel, au début de l'étape de cristallisation, la masse fondue de silicium est maintenue à la température de 1400 °C pendant 2 à 3 minutes.

3. Procédé selon la revendication 1 ou 2, dans lequel le faisceau d'électrons qui fond le silicium est déplacé de manière contrôlée d'un point à un autre point sur la surface du produit fondu et en faisant une circulation au niveau de chaque point, ce qui permet d'amorcer la formation du groupe, où la circulation au niveau de chaque point est faite de 20 à 30 microsecondes.

4. Procédé selon la revendication 3, dans lequel la température à l'intérieur de chaque point mis en circulation est modifiée de manière contrôlée de telle sorte que la température à l'intérieur de chaque point mis en circulation serait 10 à 12 °C inférieure à la température au niveau de la circonférence dudit point mis en circulation.

5. Procédé selon l'une quelconque des revendications précédentes, dans lequel une carbonisation partielle des groupes et un dopage par des impuretés telles que des atomes de phosphore et/ou de bore, sont à une température allant de 800 °C à 900 °C.

6. Procédé selon l'une quelconque des revendications précédentes, dans lequel la puissance totale des faisceaux d'électrons est comprise entre 120 et 180 kW, la fréquence d'exposition de faisceau d'électrons est comprise entre 30 et 450 Hz et la taille du point de faisceau est comprise entre 1 cm et 4 cm.

**Fig.1**

**Fig.2**

factor

The intensity of solar radiation of modules in W/m2

70-100 / 150 / 200 / 300 / 400 / 500 / 600 / 700/ 800 / 900/ 1000 / 1100 / 1200/ 1300/ 1462

**Fig.3**

Solar radiation of modules Watt/m2

Time of day in hours

UMG- modules                    SO-G modules

**Fig. 4**

Devoted electric power of the module in kWh

Test period 5000 operating hours

**Fig. 5**

Effectiveness ratio between multi-crystalline and UMG – modules  in kWh (AC) / kWhp within a month

The average monthly electricity supply kWp

UMG – solar modules

SO-G multicrystalline  solar modules

**Fig.6**

**EP 2 883 837 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8454920 B
- WO 2012100485 A

- US 7704478 B